(19) Europäisches Patentamt
European Patent Office
Office européen des brevets

(11) EP 3 431 858 A1

(12) EUROPEAN PATENT APPLICATION
published in accordance with Art. 153(4) EPC

(43) Date of publication:
23.01.2019 Bulletin 2019/04

(51) Int Cl.:
F16L 59/065 (2006.01)

(21) Application number: 17766128.7

(22) Date of filing: 07.02.2017

(86) International application number:
PCT/JP2017/004308

(87) International publication number:
WO 2017/159120 (21.09.2017 Gazette 2017/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
MA MD

(30) Priority: 18.03.2016 JP 2016055439

(71) Applicant: Panasonic Intellectual Property
Management Co., Ltd.
Osaka-shi, Osaka 540-6207 (JP)

(72) Inventors:
• SHIMA, Michihiro
Osaka-shi, Osaka 540-6207 (JP)
• YUASA, Akiko
Osaka-shi, Osaka 540-6207 (JP)

(74) Representative: Eisenführ Speiser
Patentanwälte Rechtsanwälte PartGmbB
Postfach 31 02 60
80102 München (DE)

(54) **VACUUM THERMAL INSULATION MATERIAL AND HOME APPLIANCE, HOUSE WALL AND TRANSPORT EQUIPMENT PROVIDED WITH SAME**

(57)     A vacuum heat insulating material is provided with: a sheath material; and a core material that is sealed inside the sheath material in a hermetically sealed decompressed state. The sheath material includes a gas barrier layer containing a layered material. The sheath material is configured such that a product d×E of a thickness d (unit: mm) and a tensile modulus E (unit: Pa) of the sheath material is set to be less than or equal to 600 MPa·mm, the tensile modulus being measured with a dynamic viscoelasticity measuring device. Accordingly, it is possible to provide a vacuum heat insulating material capable of effectively preventing the brittleness of the sheath material including the gas barrier layer that contains the layered material.

FIG. 2A

20A(20)
40
21
23
22

EP 3 431 858 A1

## Description

TECHNICAL FIELD

The present invention relates to a vacuum heat insulating material formed by blending a layered material into a sheath material, and a home appliance, a house wall, or transportation equipment that is provided with the vacuum heat insulating material.

BACKGROUND ART

A vacuum heat insulating material is typically configured by sealing a core material inside a sheath material in a hermetically sealed decompressed state (substantially vacuum state). The sheath material has gas barrier properties for maintaining the inside in the substantially vacuum state.

For improving the gas barrier properties, there has hitherto been proposed a configuration where a layered material is blended into a gas barrier layer provided in the sheath material (e.g., see PTLs 1 to 3).

PTLs 1 and 2 each disclose a configuration where a sheath material of a vacuum heat insulating material includes a resin composition layer with gas barrier properties which is made up of resin and an inorganic layered compound. As specific examples of the inorganic layered compound, graphite, phosphate derivative compound, chalcogenide, clay mineral, and the like are described.

PTL 3 discloses a configuration where a sheath material of a vacuum heat insulating material includes a welded layer and a gas barrier layer, and the gas barrier layer contains a layered clay material and a polymer material.

Each of the above patent literatures has a configuration where the sheath material of the vacuum heat insulating material includes the gas barrier layer containing the layered material.

However, the sheath material with the above configuration could be broken or damaged over time. The reason for this is that the stiffness of the sheath material increases due to the gas barrier layer containing the layered material. Hence, the conventional configuration of the sheath material cannot sufficiently deal with deformation of the sheath material over time. This is considered to be because the sheath material easily becomes brittle.

Citation Lists

Patent Literatures

PTL 1: Unexamined Japanese Patent Publication No. H11-182781
PTL 2: Unexamined Japanese Patent Publication No. H11-257580
PTL 3: Unexamined Japanese Patent Publication No. 2009-085255

SUMMARY OF THE INVENTION

The present invention provides a vacuum heat insulating material capable of effectively preventing brittleness of a sheath material including a gas barrier layer that contains a layered material.

The inventors of the present application have intensively studied a method for preventing the brittleness of the sheath material. As a result, the inventors have obtained the following knowledge and found that the brittleness of the sheath material can be effectively prevented.

Specifically, the inventors of the present application have found that in a sheath material including a gas barrier layer that contains a layered material, a value of the product of a thickness and a tensile modulus of the sheath material exerts an influence on reduction in the brittleness of the sheath material. That is, the inventors have found that the brittleness of the sheath material can be effectively reduced by setting the product of the thickness and the tensile modulus of the sheath material to less than or equal to a predetermined upper limit, to complete the present invention.

That is, the vacuum heat insulating material of the present invention is provided with a sheath material and a core material that is sealed inside the sheath material in a hermetically sealed decompressed state. The sheath material includes a gas barrier layer containing a layered material. The sheath material is configured such that a product $d \times E$ of a thickness d (unit: mm) and a tensile modulus E (unit: Pa) of the sheath material is set to be less than or equal to 600 MPa·mm, the tensile modulus being measured with a dynamic viscoelasticity measuring device.

With this configuration, in the case of the sheath material including the gas barrier layer that contains the layered material, the product of the thickness and the tensile modulus of the sheath material is set so as to be less than or equal to a predetermined upper limit. Accordingly, for example, even when external force such as atmospheric pressure is applied to the sheath material, the sheath material can be deformed favorably. Thus, also in the gas barrier layer containing the layered material and the sheath material containing this gas barrier layer, it is possible prevent or avoid brittleness and effectively prevent breakage or damage due to deformation of the sheath material over time. This can result in achievement of a vacuum heat insulating material having excellent heat insulating performance over a long period of time.

Moreover, a home appliance, a house wall, or a transportation equipment, of the present invention is provided with the vacuum heat insulating material having the above configuration.

BRIEF DESCRIPTION OF THE DRAWINGS

FIG. 1 is a cross-sectional view schematically illustrating an example of a configuration of a vacuum heat insulating material according to an exemplary embodiment of the present invention.

FIG. 2A is a cross-sectional view schematically illustrating a configuration example of a sheath material of the vacuum heat insulating material.

FIG. 2B is a cross-sectional view schematically illustrating another configuration example of the sheath material of the vacuum heat insulating material.

FIG. 2C is a cross-sectional view schematically illustrating still another configuration example of the sheath material of the vacuum heat insulating material.

FIG. 2D is a cross-sectional view schematically illustrating still another configuration example of the sheath material of the vacuum heat insulating material.

FIG. 3 is a table illustrating an example of comparison results of characteristics in various configurations of the sheath material of the vacuum heat insulating material.

DESCRIPTION OF EMBODIMENT

An exemplary embodiment of the present invention will be described below with reference to the drawings. Note that this exemplary embodiment is not intended to limit the present invention. In the following, through all the drawings, identical or equivalent parts are given identical reference marks, and repeated description will be omitted.

(Exemplary Embodiment)

The exemplary embodiment of the present invention will be described below by being divided into items of "Vacuum heat insulating material", "Sheath material", "Manufacturing method for gas barrier layer and sheath material", "Manufacturing method for vacuum heat insulating material and applications thereof', and some other items.

[Vacuum heat insulating material]

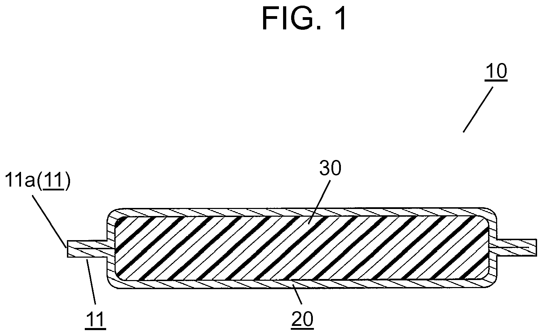

First, a configuration of a vacuum heat insulating material according to the exemplary embodiment of the present invention will be described with reference to FIG. 1.

FIG. 1 is a cross-sectional view schematically illustrating a configuration example of a vacuum heat insulating material according to the exemplary embodiment of the present invention.

As illustrated in FIG. 1, vacuum heat insulating material 10 of the present exemplary embodiment is made up of sheath material (outer covering material) 20, core material 30, and the like. Core material 30 is sealed inside sheath material 20 in a hermetically sealed decompressed state (substantially vacuum state).

Sheath material 20 is formed of a saclike member having gas barrier properties. In the present exemplary embodiment, sheath material 20 is formed into the saclike shape by, for example, making two laminated sheets face each other and sealing the periphery of the laminated sheets. In the sealed section on the periphery, core material 30 does not exist inside, and the laminated sheets are in contact with each other to constitute sealed part 11. Sealed part 11 is formed in a fin shape extending from the body of vacuum heat insulating material 10 to the circumference thereof.

In the present exemplary embodiment, a circumferential edge portion of sealed part 11 (especially, the outer end surface of sealed part 11 and its vicinity portion) will be referred to as "marginal part 11a" in description. A specific configuration of sheath material 20 will be described later.

In this case, a material for core material 30 is not particularly limited so long as being a member having heat insulating properties. Specific examples of the material include known materials such as a fiber material and a foam material.

In the present exemplary embodiment, as core material 30, for example, an inorganic fiber made of fiber of an inorganic material is used. Specific examples of the inorganic fiber include glass fiber, ceramic fiber, slag wool fiber, and rock wool fiber.

Core material 30 is, for example, shaped into a platy form and then used. The molding can prevent segregation of materials, and the like, which tend to occur at the time of mixing a plurality of samples. At this time, other than the above inorganic fiber, a known binder material, a powder, and the like may be contained. Introducing these materials contributes to improvement in physical properties, such as strength, uniformity, and stiffness, of core material 30.

Besides the above inorganic fiber, the examples of core material 30 include a thermosetting foam. The thermosetting foam is formed by foaming a thermosetting resin or a resin composition containing this resin (thermosetting resin composition) by a known method. The thermosetting resin is not particularly limited, and specific examples of the thermosetting resin include an epoxy resin, a phenol resin, an unsaturated polyester resin, a urea resin, a melamine formaldehyde resin, polyimide, and polyurethane. At this time, a forming method for the thermosetting foam is not particularly limited, and the thermosetting foam may be formed by foaming a known foaming agent in known conditions.

Moreover, the examples of the material for core material 30 besides the inorganic fiber and the thermosetting foam described above include known organic fibers (e.g., fibers made of organic materials such as nylon and polyester). In this case, a specific sort of the organic fiber is not particularly limited.

Vacuum heat insulating material 10 of the present exemplary embodiment is configured as described above.

[Sheath material]

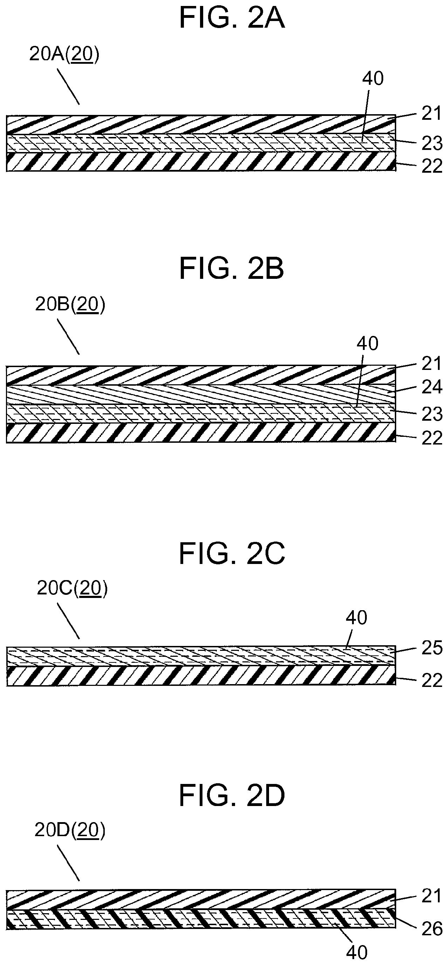

Next, a specific configuration examples of sheath material 20 included in above vacuum heat insulating material 10 will be described with reference to FIGS. 2A to 2D.

FIG. 2A is a cross-sectional view schematically illustrating a configuration example of a sheath material of the vacuum heat insulating material. FIG. 2B is a cross-sectional view schematically illustrating another configuration example of the sheath material of the vacuum heat insulating material. FIG. 2C is a cross-sectional view schematically illustrating still another configuration example of the sheath material of the vacuum heat insulating material. FIG. 2D is a cross-sectional view schematically illustrating still another configuration example of the sheath material of the vacuum heat insulating material.

As illustrated in FIGS. 2A to 2D, sheath material 20 of the present exemplary embodiment is exemplified by sheath materials 20A to 20D, and the like each made up of a laminated sheet with a multi-layered structure. Sheath materials 20A to 20D contain at least gas barrier layer 23, 25, or 26 with the layered material dispersed therein, described later.

First, the configuration of sheath material 20A as an example of sheath material 20 will be described with reference to FIG. 2A.

As illustrated in FIG. 2A, sheath material 20A is made up of a laminated sheet with a three-layered structure including protective layer 21, heat sealing layer 22, and gas barrier layer 23. Gas barrier layer 23 is disposed as sandwiched between protective layer 21 and heat sealing layer 22.

Protective layer 21 constitutes the outer surface of vacuum heat insulating material 10 in contact with the external air. Meanwhile, heat sealing layer 22 constitutes the inner surface of vacuum heat insulating material 10 in contact with core material 30.

The layered material described later is contained in gas barrier layer 23 as dispersed thereover to constitute a layered-material-containing gas barrier layer.

Sheath material 20A is configured as described above.

Hereinafter, the side of protective layer 21, namely, the side to become the outer surface of vacuum heat insulating material 10 will be referred to as the "upper side", and the side of heat sealing layer 22, namely, the side to become the inner surface of vacuum heat insulating material 10 will be referred to as the "lower side."

Next, a configuration of sheath material 20B as an example of sheath material 20 will be described with reference to FIG. 2B.

As illustrated in FIG. 2B, sheath material 20B is made up of a laminated sheet with a four-layered structure including protective layer 21, heat sealing layer 22, and two-layered gas barrier layer 23 and gas barrier layer 24. Gas barrier layers 23, 24 with the two-layered configuration are disposed as sandwiched between protective layer 21 and heat sealing layer 22.

That is, sheath material 20B is formed by laminating protective layer 21, gas barrier layer 24, gas barrier layer 23, and heat sealing layer 22 in order from the top toward the bottom. In sheath material 20B illustrated in FIG. 2B, lower-side gas barrier layer 23 constitutes the layered-material-containing gas barrier layer which contains the layered material. Meanwhile, upper-side gas barrier layer 24 constitutes the gas barrier layer not containing the layered material.

The sheath material 20B has been described taking as an example the configuration where lower-side gas barrier layer 23 contains the layered material and upper-side gas barrier layer 24 does not contain the layered material, but the configuration is not limited thereto. For example, a configuration may be formed where instead of lower-side gas barrier layer 23, upper-side gas barrier layer 24 contains the layered material. Alternatively, the configuration may be formed where both gas barrier layer 23, 24 contain the layered material.

The description has been given taking as an example the configuration where two gas barrier layers 23, 24 are sandwiched between protective layer 21 and heat sealing layer 22 in above sheath material 20B. However, a configuration where three or more gas barrier layers are sandwiched may be formed.

Sheath material 20B is configured as described above.

Note that the configuration of sheath material 20 of the present exemplary embodiment is not limited to the configuration of each of laminated sheets 20A, 20B, provided with protective layer 21, heat sealing layer 22, and one or more gas barrier layers 23. Sheath material 20 may only have for example, at least one layer of the layered-material-containing gas barrier layers described above.

That is, as is sheath material 20C illustrated in FIG. 2C, the sheath material may be made up of a laminated sheet with a two-layered structure including upper-side gas barrier layer 25 and lower-side heat sealing layer 22. In this case, gas barrier layer 25 has a function of a "protective layer - gas barrier layer" which also serves as protective layer 21.

Further, as is sheath material 20D illustrated in FIG. 2D, the sheath material may be made up of a laminated sheet with two-layered structure of upper-side protective layer 21 and lower-side gas barrier layer 26. In this case, gas barrier layer 26 has a function of a "heat sealing layer-gas barrier layer" which also serves as heat sealing layer 22.

Further, although not illustrated, when a single-layered gas barrier layer is configured to serve as both protective layer 21 and heat sealing layer 22, sheath material 20 may be made up only of the single-layered gas barrier layer.

Further, the example has been described above where protective layer 21, heat sealing layer 22, and one or more gas barrier layers 23 to 26 constitute sheath material 20, but the configuration is not limited to this. Other than the above layer configuration, sheath material 20 may be configured including a layer that has another function, such as a coloring layer. It is thus possible to improve appearance characteristics.

Sheath material 20 of the present exemplary embodiment is configured as described above.

Next, protective layer 21 constituting a part of sheath material 20 will be described.

Protective layer 21 has a function of protecting the outer surface (front surface) of vacuum heat insulating material 10 in contact with the external air.

A specific material for protective layer 21 is not particularly limited, and may only be a resin having a certain degree of durability in terms of chemical resistance, shock resistance, long-term stability, and the like. Specific examples include polyethylene terephthalate (PET), nylon (polyamide, PA), polycarbonate (PC), polyimide (PI), polyether ether ketone (PEEK), polyphenylene sulfide (PPS), polysulphone (PPS), and ultra-high molecular weight polyethylene (U-PE, UHPE or UHMWPE).

Note that the above resins constituting protective layer 21 may be used singly, or two sorts or more of the resins may be used in appropriate combination as a polymer alloy. In the case of the polymer alloy, other than the resin preferable as protective layer 21, a resin such as acrylonitrile butadiene styrene (ABS) may be contained.

Further, protective layer 21 may contain components other than the resins described above, such as various additives like an oxidant inhibitor. That is, protective layer 21 may be made up of either a resin alone or a resin composition containing another component.

Further, the example has been illustrated where protective layer 21 is made up of the one-layered (single-layered) resin film in each of sheath materials 20A to 20D illustrated in FIGS. 2A to 2D, but protective layer 21 may be configured by laminating a plurality of resin films. Note that the thickness of protective layer 21 is not particularly limited so long as being a thickness within a predetermined range (e.g., from several μm to several 100 μm, inclusive) capable of protecting sheath material 20 and the outer surface of vacuum heat insulating material 10.

Protective layer 21 in sheath material 20 is configured as described above.

Next, heat sealing layer 22 constituting a part of sheath material 20 will be described.

The laminated sheets constituting sheath material 20 is made to face each other and bonded by heat sealing layer 22, so that heat sealing layer 22 functions as an adhesive layer forming sealed part 11. Furthermore, heat sealing layer 22 also functions as the inner-surface protective layer that protects the inner surface of vacuum heat insulating material 10, such as core material 30.

The function of heat sealing layer 22 as the adhesive layer and the function of heat sealing layer 22 as the inner-surface protective layer will be described below.

First, the function of heat sealing layer 22 as the adhesive layer will be described taking as an example the configuration of sheath material 20A illustrated in FIG. 2A.

In the case of sheath material 20A made up of the laminated sheet having the three-layered structure illustrated in FIG. 2A, heat sealing layers 22 which are two laminated sheets are disposed so as to face each other, and a predetermined section (e.g., circumferential edge) is heated. Hence, sheath materials 20A are heat-sealed using heat sealing layer 22 as the adhesive layer. That is, the periphery of sheath materials 20A made to face each other is heat-sealed to form saclike sheath material 20A as described above.

Next, the function of heat sealing layer 22 as the inner-surface protective layer will be described.

In the case of sheath material 20A illustrated in FIG. 2A, one surface (outer surface) of gas barrier layer 23 is protected by protective layer 21. Similarly, the other surface (inner surface) of gas barrier layer 23 is protected by heat sealing layer 22. In this case, protective layer 21 functions as an "outer-surface protective layer" as seen from gas barrier layer 23. Meanwhile, heat sealing layer 22 functions as an "inner-surface protective layer".

Core material 30 and the like are sealed inside sheath material 20 of vacuum heat insulating material 10. At this time, heat sealing layer 22 covers the surface (inner surface side) of gas barrier layer 23. Hence, heat sealing layer 22 can reduce or avoid an influence on gas barrier layer 23 by, for example, the entry or the like of the sealed matter such as core material 30 on the inside.

Note that a material for heat sealing layer 22 is not particularly limited so long as being a material having heat sealing properties capable of melting and adhesion by heating. For example, the material may only be various thermoplastic resins (heat sealing resins). Specific examples of the material include resins such as high-density polyethylene (HDPE), low-density polyethylene (LDPE), linear low-density polyethylene (LLDPE), ultra-high molecular weight polyethylene (U-PE, UHPE, or UHMWPE), polypropylene (PP), ethylene-vinyl acetate copolymer (EVA), and nylon (polyamide, PE).

The above resins constituting heat sealing layer 22 may be used singly, or two sorts or more of the resins may be used in appropriate combination as a polymer alloy. In the case of the polymer alloy, other than the resin preferable as heat sealing layer 22, a resin such as polystyrene (PS) may be contained.

Further, heat sealing layer 22 may contain components other than the resins described above, such as various additives like a plasticizer. That is, heat sealing layer 22 may be made up of either a resin alone or a resin composition containing another component.

Further, similarly to protective layer 21, the example has been illustrated where heat sealing layer 22 is made up of the one-layered (single-layered) resin film in each of sheath materials 20A to 20C illustrated in FIGS. 2A to 2C, but heat sealing layer 22 may be configured by laminating a plurality of resin films. It is thereby possible to obtain an effect of expanding an applicable range for a heat sealing temperature.

The thickness of heat sealing layer 22 is not particularly limited, and may only be such a thickness (e.g., several μm or larger) as to be able to exert sufficient adhesive properties when sheath materials 20 are bonded to each other. Further, the thickness of heat sealing layer 22 is more preferably a thickness in such a range (e.g., several μm or larger) as to be able to protect the inner surface of sheath material 20 as the inner-surface protective layer. It is thereby possible to obtain an effect of being able to reduce pressure during the heat sealing.

Heat sealing layer 22 of the present exemplary embodiment is configured as described above.

Next, gas barrier layers constituting a part of sheath material 20 will be described.

As described above, gas barrier layers 23, 24, 25, 26 have a function of preventing the entry of the external air inside vacuum heat insulating material 10.

In the gas barrier layer of the present exemplary embodiment, at least one layer of the gas barrier layers included in sheath material 20 is made up of the layered-material-containing gas barrier layer.

Note that a specific configuration of gas barrier layers 23 to 26 and manufacturing methods for sheath materials 20A to 20D including the layered-material-containing gas barrier layer will be described later.

In the present exemplary embodiment, especially the product of a thickness and a tensile modulus of sheath material 20 is set to be less than or equal to a predetermined upper limit, to prevent the brittleness of sheath material 20.

Specifically, the product d×E of a thickness d [mm] and a tensile modulus E [Pa] of sheath material 20 is set so as to be less than or equal to 600 MPa·mm, the tensile modulus being measured with a dynamic viscoelasticity measuring device at room temperature. This point will be described later.

Sheath material 20 of the present exemplary embodiment is configured as described above.

[Manufacturing methods for gas barrier layer and sheath material]

Hereinafter, manufacturing methods for the gas barrier layer and the sheath material will be described.

First, the manufacturing method for the gas barrier layer will be described.

As described above, gas barrier layers 23, 25, 26 each constitute the layered-material-containing gas barrier layer, while gas barrier layer 24 constitutes the gas barrier layer not containing the layered material. Herein, in the case of gas barrier layer 24 not containing the layered material, a known film having gas barrier properties can be used as gas barrier layer 24.

Specifically, as the known film, metal foils such as aluminum film, a copper foil, and a stainless are exemplified. There is also exemplified a deposited film having a deposited layer obtained by depositing metal, inorganic oxide, or the like on a resin film to become a substrate. Further, as the known film for gas barrier layer 24, there is exemplified a film (coating deposited film) obtained by performing known coating processing on the surface of the deposited film. However, gas barrier layer 24 is not particularly limited to the known film exemplified above.

The metal or the inorganic oxide which is deposited on the deposited film or the coating deposited film is not particularly limited, and examples thereof include aluminum, copper, alumina, and silica.

Further, a resin constituting a resin film to become a substrate of the deposited film or the coating deposited film is not particularly limited, and examples of the resin include polyethylene terephthalate (PET), and ethylene-vinylalcohol copolymer (EVOH).

Similarly to protective layer 21 or heat sealing layer 22, the resin film made up of either a resin alone or a resin composition containing a component except for the resin, such as an oxidant inhibitor. For example, when the gas barrier layer 24 is made up of a metal foil, a resin layer or some other layer may be laminated on the metal foil. That is, gas barrier layer 24 may have either a single-layered structure or a multi-layered structure.

On the other hand, in the case of gas barrier layers 23, 25, 26 each being the layered-material-containing gas barrier layer, the gas barrier layer may only have a configuration where the layered material is dispersed in the resin or the resin composition. As the resin or the resin composition constituting the layered-material-containing gas barrier layer, a resin or a resin composition similar to that for the resin film (the substrate such as the deposited film) exemplified in gas barrier layer 24 can be used.

In regard to gas barrier layer 25 that functions as the protective layer-gas barrier layer among the gas barrier layers 23, 25, 26, as the resin or the resin composition, a resin or a resin composition similar to that for protective layer 21 described above can be used. In regard to gas barrier layer 26 that functions as the protective layer-gas barrier layer, as the resin or the resin composition, a resin or a resin composition similar to that for heat sealing layer 22 described above can be used. In regard to gas barrier layer 23, a resin or a resin composition similar to that for protective layer 21 or heat sealing layer 22 can be used.

Note that the layered material contained in each of the gas barrier layers 23, 25, 26 is not particularly limited, and examples thereof include layered silicates such as clay mineral, synthesized hectorite, and denatured bentonite. Similarly, the examples include scale-like (flake-like, sheet-like) particles of metals or metal compounds, such as aluminum scale, iron oxide scale, strontium titanate scale, silver scale, stainless scale, and zinc scale. The examples also include metal foils such as an aluminum foil, a zinc foil, a bronze foil, a nickel foil, and an indium foil. The examples further include nonmetallic inorganic compounds such as layered silica, hexagonal boron nitride, graphite, silicon scale, and layered niobium titanate.

The layered material may be used singly, or two sorts or more of the resins may be used in appropriate combination. It is thereby possible to obtain an effect of improving the barrier properties and the like.

Further, among the layered silicates described above, various sorts of clay minerals are known for the clay minerals. That is, these clay minerals can also be used as the layered material. A specific clay mineral is not particularly limited, and examples thereof include one-to-one layer types such as lizardite, amesite, kaolinite, dickite, halloysite, talc, and pyrophyllite. Similarly, the examples include two-to-one layer types such as saponite, hectorite, montmorillonite, beidellite, 3-octahedral vermiculite, 2-octahedral vermiculite, phlogopite, biotite, lepidolite, illite, muscovite, paragonite, clintonite, margarite, clinochlore, chamosite, nimite, donbassite, cookeite, and sudoite. The examples further include misfit types such as antigorite, greenalite, and caryopilite. Note that clintonite described above is classified into the misfit type as well as the two-to-one layer type.

As the layered material, the above clay minerals may be used singly, or two sorts or more of the resins may be used in appropriate combination. Further, the clay mineral may be appropriately combined with one or more of layered materials except for the clay mineral and used as the layered material.

Next, a manufacturing method for the layered-material-containing gas barrier layer (gas barrier layers 23, 25, 26) will be described.

The manufacturing method for the layered-material-containing gas barrier layer is not particularly limited, and a known manufacturing method is usable so long as being a method in which the layered material described above is dispersed and contained in the resin or the resin composition.

As illustrated in FIGS. 2A to 2D, the layered-material-containing gas barrier layer of the present exemplary embodiment is included in the laminated sheet with the multi-layered structure to become each of sheath materials 20A to 20D.

Thus, the manufacturing method for the layered-material-containing gas barrier layer is not particularly limited so long as being the manufacturing method for the laminated sheet with the multi-layered structure. A known method is usable as the manufacturing method for the layered-material-containing gas barrier layer.

Hereinafter, a description will be given of a typical example of a manufacturing method for sheath material 20 including the layered-material-containing gas barrier layer.

Examples of the manufacturing method for sheath material 20 include a method including a formation step of the layered-material-containing gas barrier layer, in which the layered-material-containing gas barrier layer is formed by a melting-mixing method or a coating method.

First, the manufacturing method by the melting-mixing method will be described.

To begin with, the resin (or resin composition) is mixed with the layered material, and the mixture is put into a melting-mixer.

Next, the resin is heated and mixed by the melting-mixer, to be melted. At this time, pressure is applied to disperse the layered material in the resin. A resin mixture with the layered material dispersed therein is thus obtained.

Next, the obtained resin mixture is molded into a film shape (sheet shape) by extrusion molding to form a layered-material dispersing resin film. Note that the layered-material dispersing resin film corresponds to gas barrier layer 23, for example.

Subsequently, protective layer 21 and a resin film to become heat sealing layer 22 are laminated on the obtained layered-material dispersing resin film. In this manner, sheath material 20A made up of the laminated sheet with the three-layered structure, illustrated in FIG. 2A, is prepared. In the case of the above manufacturing method, the three-layered laminated structure of protective layer 21, gas barrier layer 23, and heat sealing layer 22 may be prepared as molded by, for example, a co-extrusion molding method.

The manufacturing method by the coating method will be specifically described below.

To begin with, an anchor coat agent such as allylamine polymer is applied to one surface of resin film to become protective layer 21 (e.g., the surface to become the lower side (inner surface side) of protective layer 21 in FIG. 2A).

Next, the resin (or resin composition) is dissolved into a solvent such as cyclopentanone, while the layered material is also added, to be agitated and mixed. A layered-material containing resin solution is thus obtained.

Next, the layered-material containing resin solution is applied onto a layer of the anchor coat agent applied to protective layer 21, followed by drying. Note that the application method for the layered-material containing resin solution is not particularly limited. For example, a roll method such as a gravure method, a spray method, or some other method may be used. By the drying, gas barrier layer 23 is formed on one surface of protective layer 21.

Next, for example, an adhesive such as an epoxy adhesive is applied to one surface of gas barrier layer 23, which has not been made to adhere to protective layer 21. Then, the resin film to become heat sealing layer 22 is laminated on the surface of gas barrier layer 23 where the adhesive has applied by, for example, a dry laminate method or some other method. In this manner, sheath material 20A made up of the laminated sheet with the three-layered structure, illustrated in FIG. 2A, is manufactured.

Sheath material 20 is manufactured as described above.

Note that the thickness of each of gas barrier layers 23 to 26 is not particularly limited so long as being a thickness in a predetermined range (e.g., about several μm) in which the gas barrier properties can be exerted in accordance with the quality of the material for each of gas barrier layers 23, 24, 25. At this time, for example, in the case of the layered-material-containing gas barrier layer, such as gas barrier layers 23, 25, 26 described above, the thickness may be set considering not only the conditions such as the quality of the material but also the sorts, the additive amount, and the like of the layered material. Further, when the plurality of gas barrier layers 23, 24 illustrated in FIGS. 2B are included, the thickness may be set considering the gas barrier properties in the whole of the plurality of gas barrier layers.

[Manufacturing method for vacuum heat insulating material and applications thereof]

In the following, a description will be given of a manufacturing method for the vacuum heat insulating material and applications thereof.

First, the manufacturing method for vacuum heat insulating material 10 will be described.

Note that a specific manufacturing method for vacuum heat insulating material 10 is not particularly limited, and a known manufacturing method can be used.

For example, in the manufacturing method for vacuum heat insulating material 10 of the present exemplary embodiment, to begin with, sheath material 20 is formed into a saclike shape described below.

Next, core material 30, and another material such as a gas adsorbent as needed, are inserted inside saclike sheath material 20. Then, saclike sheath material 20 described above is hermetically sealed in a hermetically sealed decompressed state (substantially vacuum state). This manufacturing method for vacuum heat insulating material 10 has been adopted.

In this case, a method for forming sheath material 20 into the saclike shape is not particularly limited, and for example, sheath material 20 is formed by a method shown below.

First, two laminated films to become sheath material 20 are prepared. Then, in a state where heat sealing layers 22 of the respective laminated films are disposed so as to face each other, most of the peripheral edge of sheath material 20 is heat-welded. Saclike sheath material 20 is thus formed.

Specifically, when sheath material 20 has a rectangular shape, only one side of four sides is left as an opening, and the peripheral edge except for the opening is heat-sealed. At this time, the heat-welding is conducted so as to surround the center portion of sheath material 20 where core material 30 is accommodated. Saclike sheath material 20 is thus formed.

Next, core material 30 and the like are inserted inside sheath material 20, formed into the saclike shape by the above method, through the opening. At this time, sheath material 20 with core material 30 inserted therein is decompressed in decompression equipment such as decompression chamber. Hence, the inside of saclike sheath material 20 is decompressed through the opening and comes into the substantially vacuum state.

Next, in the decompression equipment, the opening of sheath material 20 is heat-welded to hermetically seal the inside of sheath material 20 in the same manner as the other peripheral edge. In this manner, vacuum heat insulating material 10 illustrated in FIG. 1 is prepared.

Note that conditions such as heat welding and decompression, which are performed in the manufacturing of vacuum heat insulating material 10 described above, are not particularly limited, and various known conditions can be adopted.

Further, a formation method for saclike sheath material 20 is not limited to a formation method using two laminated films. For example, one laminated film may be bent into halves and both side edges may be heat-welded, to prepare saclike sheath material 20 having an opening. Moreover, the laminated film may be shaped into a cylindrical form and one opening may be sealed, to prepare saclike sheath material 20.

Vacuum heat insulating material 10 of the present exemplary embodiment is configured in the manner as thus described.

Vacuum heat insulating material 10 manufactured by the above method exerts highly excellent heat insulating performance since the inside of vacuum heat insulating material 10 is in the hermetically sealed decompressed state (substantially vacuum state).

However, since the inside of above vacuum heat insulating material 10 is in the substantially vacuum state, the atmospheric pressure is applied to vacuum heat insulating material 10. Thus, especially sheath material 20 may be deformed by the atmospheric pressure over time.

As described above, sheath material 20 of the present exemplary embodiment is configured including at least one layer of the layered-material-containing gas barrier layers. The stiffness of the layered-material-containing gas barrier layer increases due to the dispersed layered material. Hence, sheath material 20 including the layered-material-containing gas barrier layer cannot sufficiently deal with deformation caused by the atmospheric pressure. Hence, sheath material 20 may become brittle and then be broken or damaged. As a result, sheath material 20 becomes unable to maintain the substantially vacuum state on the inside due to the breakage or damage, thus losing its excellent heat insulating performance.

Therefore, the inventors of the present application have studied the configuration of the sheath material which reduces or avoids the brittleness of sheath material 20.

The inventors of the present application have then found that the product of the modulus E and the thickness d of the sheath material is effective as an index, as described above.

The reason for this is as follows. The modulus E (unit: MPa) per unit thickness shows the magnitude of internal stress per unit cross-sectional area, which occurs when the sheath material is deformed by one percent. Thus, in the case of the modulus E being low, even when the sheath material is deformed, the internal stress hardly occurs in the sheath material. Meanwhile, the internal stress becomes higher with increase in thickness d (unit: mm) of the sheath material.

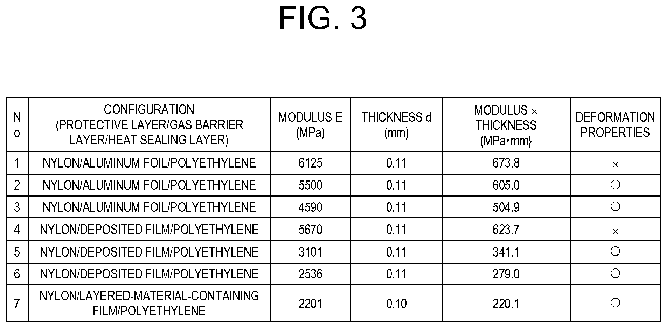

Then, characteristics such as deformation properties of various sheath materials were compared by taking the above product of the modulus E and the thickness d as the index. FIG. 3 illustrates results of the comparison.

FIG. 3 is a table illustrating an example of the comparison results of the characteristics in various configurations of the sheath material of the vacuum heat insulating material.

In regard to the sheath material with the three-layered structure described in FIG. 2A, FIG. 3 illustrates evaluation results concerning deformation properties of seven samples, prepared by using the same materials for the protective layer and the heat sealing layer while using three different sorts of materials for the gas barrier layer, such that the seven samples have the products of different moduli E and the thickness d.

First, Samples 1 to 3 were each made up of three layers of nylon/aluminum foil/polyethylene. At this time, the samples were prepared making the total thicknesses d of the sheath materials the same while varying the thicknesses and additives of the respective layers so as to make the moduli different.

Further, Samples 4 to 6 were each made up of three layers of nylon/deposited film/polyethylene. At this time, in the same manner as above, the samples were prepared making the total thicknesses d of the sheath materials the same while varying the thicknesses and additives of the respective layers so as to make the moduli different, for example.

Moreover, Sample 7 was made up of three layers of nylon/layered-material-containing film/polyethylene, and prepared such that the product of the modulus E and the thickness d was about 200 MPa.

Consequently, in Samples 2, 3, 5, 6, 7 where the product of the modulus E and the thickness d is set to less than or equal to 600 MPa·mm, favorable results concerning the deformation properties were obtained.

On the other hand, in Samples 1 and 4 where the product of the modulus E and the thickness d exceeds 600 MPa·mm, favorable results were not obtained.

It was further found that, even when sheath material 20 shown in Sample 7 includes the layered-material-containing gas barrier layer, it is possible to favorably deal with the deformation of sheath material 20 caused by the atmospheric pressure. That is, it was found that sheath material can be deformed favorably without impairing its barrier function.

Although FIG. 3 illustrates the table by taking as an example the configuration of the sheath material illustrated in FIG. 2A, similar results were obtained also with the configurations of FIG. 2B to FIG. 2D.

From the above results, it was found effective for the brittleness of sheath material 20 to constitute sheath material 20 such that the product d×E of the thickness d [mm] and the tensile modulus E [Pa], measured using the dynamic viscoelasticity measuring device, is less than or equal to 600 MPa·mm shown in the following formula (1).

$$\mathrm{d \times E} \leqq 600\mathrm{MPa \cdot mm} \cdots (1)$$

That is, by satisfying the above condition, it is possible to effectively the prevent breakage or damage of sheath material 20. This can result in achievement of vacuum heat insulating material 10 capable of favorably maintaining excellent heat insulating performance over a long period of time.

Note that a specific technique to make the product d×E of the thickness d and the tensile modulus E less than or equal to the above upper limit in sheath material 20 is not particularly limited. Examples of the specific technique include adjustment of the thickness d of sheath material 20 and selection of the resin component to be blended.

Especially when the resin or the resin composition contained as the resin component in the layered-material-containing gas barrier layer is similar to the heat sealing resin (thermoplastic resin) used for heat sealing layer 22, by combining the resin component with the adjustment of the thickness d, the product d×E can be easily set to be less than or equal to 600 MPa·mm.

In this case, examples of a favorable heat sealing resin include at least one of low-density polyethylene (LDPE) and linear low-density polyethylene (LLDPE). These are selected by taking, for example, a softening temperature, a glass transition temperature, or the like, as an index, which can lower a calorific value at the time of adhesion.

Further, a measuring method for the tensile modulus E of sheath material 20 is not particularly limited, and the modulus E may be measured by, for example, using a known dynamic viscoelasticity measuring device. At this time, a measurement temperature is not particularly limited and may only be a room temperature in a range from 1°C to 30°C, for example. Further, the measurement temperature may, for example, be in a range of normal temperature of $20 \pm 15°C$, which is prescribed by Japanese Industrial Standards (JIS) Z8703.

Hereinafter, a description will be given of an example of experimentally preferable measurement conditions and measurement method at the time of measuring the tensile modulus E.

First, as the dynamic viscoelasticity measuring device, a product named Q800 type, manufactured by TA Instruments, is used.

Next, a measurement mode of the dynamic viscoelasticity measuring device is set to a tensile mode or a temperature rise mode.

Then, sheath material 20 is cut into a sample piece of a predetermined size and placed in the dynamic viscoelasticity measuring device.

Subsequently, the dynamic viscoelasticity measuring device is set in conditions such as a predetermined temperature rise speed, a predetermined temperature range, a predetermined initial load, and a distortion rate. The tensile modulus E of the sample piece placed in the dynamic viscoelasticity measuring device is then measured.

A composition of the sheath material with a configuration having a desired tensile modulus E is thus selected.

With the selected composition, a sheath material having an appropriate configuration of one layer or more is prepared by the manufacturing method described above.

Further, the prepared sheath material is used to prepare vacuum heat insulating material 10 by the manufacturing method described above.

Vacuum heat insulating material 10 is manufactured as described above.

Next, applications of vacuum heat insulating material 10 manufactured by the above method will be described.

That is, vacuum heat insulating material 10 capable of maintaining the heat insulating performance over a long period of time is applicable to various applications requiring heat insulation.

As an example of a typical heat insulating application, home appliances can be cited. A specific type of the home appliance is not particularly limited, and examples of the home appliance include a refrigerator, a water heater, a rice cooker, and a jar pot.

As another example of the typical heat insulating application, a house wall can be cited.

As still another example of the typical heat insulating application, transportation equipment can be cited. A specific type of the transportation equipment is not particularly limited, and examples of the transportation equipment include a ship such as a tanker, an automobile, and an aircraft.

That is, according to the present exemplary embodiment, when the sheath material of the vacuum heat insulating material includes the layered-material-containing gas barrier layer, the product of the thickness and the tensile modulus of the sheath material is set to be less than or equal to a predetermined upper limit. Accordingly, for example, even when external force such as atmospheric pressure is applied to the sheath material, the sheath material can be deformed favorably. Therefore, even in the case of the layered-material-containing gas barrier layer and the sheath material including this layer, it is possible to prevent or avoid brittleness and effectively prevent breakage or damage caused by deformation of the sheath material over time. This can result in achievement of the vacuum heat insulating material having excellent heat insulating performance over a long period of time.

Note that the present invention is not limited to the description of the above exemplary embodiment, and various modifications are possible within the scope shown in the claims. Further, an exemplary embodiment, obtained by appropriately combining technical methods respectively disclosed in different exemplary embodiments and a plurality of modified examples, is also included in the technical scope of the present invention.

As described above, the vacuum heat insulating material of the present invention is provided with a sheath material and a core material that is sealed inside the sheath material in a hermetically sealed decompressed state. The sheath material includes a gas barrier layer containing a layered material. The sheath material is configured such that a product $d \times E$ of a thickness d (unit: mm) and a tensile modulus E (unit: Pa) of the sheath material is set to be less than or equal to 600 MPa·mm, the tensile modulus being measured with a dynamic viscoelasticity measuring device.

Accordingly, for example, even when external force such as atmospheric pressure is applied to the sheath material, the sheath material is deformed favorably. It is thus possible to effectively prevent breakage, damage, or the like caused by deformation of the sheath material over time. This can result in achievement of the vacuum heat insulating material having excellent heat insulating performance over a long period of time.

Further, the vacuum heat insulating material of the present invention may be configured such that the gas barrier layer contains the layered material in a resin or a resin composition.

With this configuration, the gas barrier layer containing the layered material becomes a layer mainly composed of the resin. Thus, especially by selecting the sort of resin, it is possible to easily set the product of the thickness and the tensile modulus of the sheath material to be a predetermined value.

Further, the vacuum heat insulating material of the present invention may be configured such that the gas barrier layer contains the heat sealing resin.

With this configuration, the resin contained in the gas barrier layer is the heat sealing resin. It is thus possible to more easily set the product of the thickness and the tensile modulus of the sheath material to be the predetermined value.

Moreover, the vacuum heat insulating material of the present invention may be configured such that the heat sealing resin is at least one thermoplastic resin of low-density polyethylene (LDPE) and linear low-density polyethylene (LLDPE).

It is thereby possible to more easily set the product of the thickness and the tensile modulus of the sheath material to be the predetermined value.

Further, the home appliance of the present invention may be provided with the vacuum heat insulating material having the above configuration.

With this configuration, the home appliance is provided with the vacuum heat insulating material having excellent heat insulating performance. It is thus possible to reduce power consumption and advance energy saving.

Moreover, the house wall of the present invention may be provided with the vacuum heat insulating material having the above configuration.

Furthermore, the transportation equipment of the present invention may be provided with the vacuum heat insulating material having the above configuration.

With this configuration, the house wall or the transportation equipment is provided with the vacuum heat insulating material having excellent heat insulating performance. It is thereby possible to enhance the heat insulating properties inside a house or inside the transportation equipment. This can result in provision of the house or the transportation equipment having high energy saving efficiency and high environmental performance.

INDUSTRIAL APPLICABILITY

The present invention is broadly applicable, over a long period of time, to the field of the vacuum heat insulating material required to have high heat insulating properties and to the field of the home appliance, the house wall, or the transportation equipment that is provided with the vacuum heat insulating material, for example.

REFERENCE MARKS IN THE DRAWINGS

    10: vacuum heat insulating material
    11: sealed part
    20, 20A, 20B, 20C, 20D: sheath material
    21: protective layer
    22: heat sealing layer
    23, 24, 25, 26: gas barrier layer
    30: core material

**Claims**

1. A vacuum heat insulating material comprising:

    a sheath material; and
    a core material that is sealed inside the sheath material in a hermetically sealed decompressed state,
    wherein
    the sheath material includes a gas barrier layer containing a layered material, and
    the sheath material is configured such that a product $d \times E$ of a thickness d and a tensile modulus E of the sheath material is set to be less than or equal to 600 MPa·mm, the tensile modulus being measured with a dynamic viscoelasticity measuring device.

2. The vacuum heat insulating material according to claim 1, wherein the gas barrier layer contains the layered material in a resin or a resin composition.

3. The vacuum heat insulating material according to claim 2, wherein the gas barrier layer contains a heat sealing resin.

4. The vacuum heat insulating material according to claim 3, wherein the heat sealing resin is at least one thermoplastic resin of low-density polyethylene (LDPE) and linear low-density polyethylene (LLDPE).

5. A home appliance comprising the vacuum heat insulating material according to any one of claims 1 to 4.

6. A house wall comprising the vacuum heat insulating material according to any one of claims 1 to 4.

7. Transportation equipment comprising the vacuum heat insulating material according to any one of claims 1 to 4.

## FIG. 1

10

11a(11)　　　　　30

11　　　　　20

# FIG. 2A

20A(20)

40

21
23
22

# FIG. 2B

20B(20)

40

21
24
23
22

# FIG. 2C

20C(20)

40

25
22

# FIG. 2D

20D(20)

21
26

40

# FIG. 3

| No | CONFIGURATION (PROTECTIVE LAYER/GAS BARRIER LAYER/HEAT SEALING LAYER) | MODULUS E (MPa) | THICKNESS d (mm) | MODULUS × THICKNESS (MPa·mm} | DEFORMATION PROPERTIES |
|---|---|---|---|---|---|
| 1 | NYLON/ALUMINUM FOIL/POLYETHYLENE | 6125 | 0.11 | 673.8 | × |
| 2 | NYLON/ALUMINUM FOIL/POLYETHYLENE | 5500 | 0.11 | 605.0 | ○ |
| 3 | NYLON/ALUMINUM FOIL/POLYETHYLENE | 4590 | 0.11 | 504.9 | ○ |
| 4 | NYLON/DEPOSITED FILM/POLYETHYLENE | 5670 | 0.11 | 623.7 | × |
| 5 | NYLON/DEPOSITED FILM/POLYETHYLENE | 3101 | 0.11 | 341.1 | ○ |
| 6 | NYLON/DEPOSITED FILM/POLYETHYLENE | 2536 | 0.11 | 279.0 | ○ |
| 7 | NYLON/LAYERED-MATERIAL-CONTAINING FILM/POLYETHYLENE | 2201 | 0.10 | 220.1 | ○ |

## INTERNATIONAL SEARCH REPORT

| International application No. |
| --- |
| PCT/JP2017/004308 |

A. CLASSIFICATION OF SUBJECT MATTER
*F16L59/065(2006.01)i*

According to International Patent Classification (IPC) or to both national classification and IPC

B. FIELDS SEARCHED

Minimum documentation searched (classification system followed by classification symbols)
F16L59/00-59/22, C09J7/02

Documentation searched other than minimum documentation to the extent that such documents are included in the fields searched
| Jitsuyo Shinan Koho | 1922-1996 | Jitsuyo Shinan Toroku Koho | 1996-2017 |
| Kokai Jitsuyo Shinan Koho | 1971-2017 | Toroku Jitsuyo Shinan Koho | 1994-2017 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| Y | JP 2008-106532 A (Matsushita Electric Industrial Co., Ltd.), 08 May 2008 (08.05.2008), paragraphs [0028], [0045] to [0072], [0091] to [0114]; fig. 1 to 2, 5 to 6 (Family: none) | 1-7 |
| Y | JP 2011-243613 A (Mitsui Chemicals, Inc.), 01 December 2011 (01.12.2011), paragraph [0035] (Family: none) | 1-7 |
| Y | JP 2013-60524 A (Hitachi Chemical Co., Ltd.), 04 April 2013 (04.04.2013), paragraph [0067] (Family: none) | 1-7 |

☒ Further documents are listed in the continuation of Box C. ☐ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| 29 March 2017 (29.03.17) | 11 April 2017 (11.04.17) |

| Name and mailing address of the ISA/ | Authorized officer |
| --- | --- |
| Japan Patent Office 3-4-3,Kasumigaseki,Chiyoda-ku, Tokyo 100-8915,Japan | |
| | Telephone No. |

Form PCT/ISA/210 (second sheet) (January 2015)

**INTERNATIONAL SEARCH REPORT**

International application No.

PCT/JP2017/004308

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2013-256574 A (Hitachi Chemical Co., Ltd.), 26 December 2013 (26.12.2013), paragraphs [0121] to [0122] (Family: none) | 1-7 |
| Y | JP 2009-92224 A (Panasonic Corp.), 30 April 2009 (30.04.2009), paragraphs [0047] to [0054]; fig. 3 (Family: none) | 6 |
| Y | JP 2008-208845 A (Matsushita Electric Industrial Co., Ltd.), 11 September 2008 (11.09.2008), paragraphs [0001] to [0009]; fig. 3 (Family: none) | 7 |
| A | JP 2009-293770 A (Hitachi Appliances, Inc.), 17 December 2009 (17.12.2009), entire text; all drawings (Family: none) | 1-7 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11182781 B
- JP H11257580 B
- JP 2009085255 A